# EUROPÄISCHE PATENTSCHRIFT

(11) **EP 1 954 639 B1**
(45) Veröffentlichungstag und Bekanntmachung des Hinweises auf die Patenterteilung: **29.06.2011**
(21) Anmeldenummer: 06818792.1
(22) Anmeldetag: 24.11.2006
(51) Int. Cl.: C03B 29/00, C03B 29/02, C03B 29/04, C03B 29/06

(54) **VORRICHTUNG ZUM BEHEIZEN VON OFENANLAGEN**
DEVICE FOR HEATING FURNACE INSTALLATIONS
DISPOSITIF DE CHAUFFAGE D'INSTALLATIONS DE FOUR

(30) Priorität: 29.11.2005 DE 102005057238
(43) Veröffentlichungstag der Anmeldung: 13.08.2008
(73) Patentinhaber: Pennekamp GmbH, 58256 Ennepetal (DE)
(72) Erfinder: HOFF, Klaus-Uwe, 42499 Hückeswagen (DE)
(74) Vertreter: Patentanwälte Buse, Mentzel, Ludewig
(86) Internationale Anmeldenummer: PCT/EP2006/011273
(87) Internationale Veröffentlichungsnummer: WO 2007/062780

(56) Entgegenhaltungen:
- EP-A- 0 879 798
- GB-A- 1 193 432
- GB-A- 2 231 950
- US-A1- 2 917 299
- US-A1- 2 987 118
- US-A1- 3 044 754

## Beschreibung

Die Erfindung bezieht sich auf eine Vorrichtung der im Oberbegriff des Anspruchs 1 genannten Art. Solcherart Vorrichtungen werden insbesondere bei der Herstellung von Glaswaren, aber auch bei der Produktion von Keramik- und Porzellanwaren und bei bestimmten Stahl- und anderen Metallwaren, beispielsweise aus Kupfer oder Aluminium, verwendet. Die Ofenanlagen können z.B. zum Brennen, Dekorieren, Anlassen, Entspannen oder Abkühlen der Waren dienen. Hierbei ist es wichtig, dass ganz bestimmte Temperaturen im Ofen vorherrschen. Da diese Temperaturen sich zumeist in einem Temperaturbereich bis 900°C befinden, müssen die Ofenanlagen beheizt werden. Hierzu wird meist Konvektionswärme vorgesehen.

Bei herkömmlichen Ofenanlagen wird ein Brenner vorgesehen, welcher beispielsweise ein Gas/Luftgemisch verbrennt. Die dabei entstehenden heißen Gase werden dann mittels eines Rohres in den Ofenraum hineingeführt. Dies hat den Nachteil, dass so keine komplett gleichmäßige Temperaturverteilung im Ofen erreicht werden kann, da sich immer einige der im Ofen befindlichen Waren näher am Rohr befinden als andere. Dies hat man versucht durch Verteilen mehrerer Rohre im Ofenraum und durch Abschirmen der Rohre auszugleichen. Das Abschirmen soll die Strahlungswärme der Rohre vermindern. Die Abschirmung vermindert auch tatsächlich die Strahlungswärme, jedoch wird dadurch die Wartung der Rohre sehr erschwert, da diese nunmehr schwer zugänglich sind.

Ein weiteres Problem ist die Verzunderung des Rohres selbst bei Verwendung von Edelstahl als Werkstoff. Die Verzunderung tritt ein, da das Rohr mit dem heißen Medium in direkten Kontakt kommt und dabei zu glühen anfängt. Durch die Verzunderung können nämlich feine Partikel in die Ofenatmosphäre gelangen. Dies ist sehr unerwünscht, insbesondere bei der Herstellung von hochwertigen Gläsern, da sich die Partikel auf den Waren absetzen können. Die Rohre müssen daher häufig ausgetauscht werden, was aufwendig und teuer ist.

Insgesamt sind solche Ofenanlagen sehr teuer, da sie je nach Anwendungsfall individuell hergestellt werden müssen. Hierbei kommt es auch maßgeblich auf die Anzahl und die Verteilung der Rohre an.

In der US 2,987,118 ist ein Flächenporenbrenner beschrieben, an dessen einer Seite ein Lüfter angebracht ist. Das Dokument beschreibt jedoch nicht, wie und wo ein Brenner in einer Ofenanlage anzuordnen wäre, um eine optimale Wärmeverteilung zu erzielen. Darüber hinaus ist der dort beschriebene Lüfter nicht dazu geeignet, das heiße Medium schnell und gleichmäßig genug im Ofenraum zu verteilen, so dass das gewünschte Temperaturprofil im Inneren des Ofens entsteht und die heißen Gase schnell genug abtransportiert werden, damit der Flächenporenbrenner nicht überhitzt.

Die DE 24 46 983 beschreibt einen Ofen für bahnförmige Materialien. Dieser verfügt über einen Flächenbrenner, welcher jedoch nicht als Porenbrenner ausgestaltet ist und somit an seiner Oberfläche offene Flammen bildet. Hieraus ergeben sich die bereits oben erwähnten Probleme durch Wärmestrahlung und Verzunderung und es kann keine gleichmäßige Temperaturverteilung in gesamten Ofenraum erreicht werden.

Das Dokument US 2,917,299 beschreibt eine Vorrichtung zum Beheizen von Ofenanlagen, in der mehrere Konvektions-Heiz- bzw. -Brenner-Einheiten vorgesehen sind, die jeweils mit einem Lüfter ausgestattet sind. Eine solche Vorrichtung ist vergleichsweise aufwendig, da mehrere Heizeinrichtungen mit Lüftern notwendig sind. Dies ist jedoch kostenintensiv. Darüber hinaus werden auch keine Flächenbrenner beschrieben. Die dort beschriebene Anlage ist somit aufwendig und teuer in der Herstellung.

Die EP 1 604 958 beschreibt eine Vorrichtung und ein Verfahren um Glasscheiben zu erhitzen. Hierzu wird jeweils ober- und unterhalb des Förderbandes der Glasscheiben ein Wärmespeicher vorgesehen, welcher jedoch durch elektrische Energie oder einen Gasbrenner erhitzt wird um dann seinerseits die Luft zu erhitzen, welche dann mit je einem Ventilator vom Wärmespeicher abgeführt und den Glaswaren jeweils ober- und unterhalb des Förderbandes zugeführt wird. Eine solche Ofenanlage hat jedoch einen schlechten Wirkungsgrad, da der Wärmespeicher jeweils immer mit erhitzt werden muss und es ergeben sich auch hohe Bauhöhen, da Platz für die Wärmespeicher und die diese erhitzenden Einrichtungen vorgesehen werden muss. Dieser erhöhte Platzbedarf ist jedoch nachteilig, da heutzutage immer wieder wenig Platz in den Produktions- und Herstellungsstätten herrscht.

Die deutsche Patentschrift DE 101 40 007 C2 zeigt einen Kühlofen zum temperieren von Glasgroßzeugteilen. Die Glasteile werden mittels eines Förderbandes durch den Innenraum der Ofenanlage geführt. Unterhalb dieses Förderbandes ist ein Brenner mit einer Brennerrohrlanze angeordnet und seitlich des Ofenraumes befindet sich ein Lüfterrad, welches die warme Luft vom Ausgangsbereich der Brennerrohrlanze absaugt, welche dann wiederum von oben dem Ofeninneren zugeführt wird. Bei dem Betrieb dieser Anlage entstehen ebenfalls die bereits oben beschriebenen Nachteile, insbesondere findet eine starke Wärmestrahlung von der offenen Flamme bzw. dem, durch die Flamme erhitzten Brennerrohr statt. Darüber hinaus verzundert das Brennerrohr auf die Dauer. Durch die asymmetrische Anordnung kann eine gleichmäßige Wärmeverteilung im gesamten Ofeninnenraum nicht realisiert werden.

Aufgabe der Erfindung ist es daher eine Vorrichtung der eingangs beschriebenen Art zu entwickeln, die die vorgenannten Nachteile vermeidet und eine saubere und gleichmäßige Wärmeverteilung in der Ofenanlage ermöglicht. Des Weiteren soll die Ofenanlage auch kostengünstiger herstellbar sein. Dies wird durch die kennzeichnenden Merkmale des Anspruchs 1 erreicht, denen folgende besondere Bedeutung zukommt.

Der Brenner ist als Flächenporenbrenner ausgebildet und befindet sich innerhalb des Ofenraumes. Darüber hinaus ist der Brenner direkt benachbart zu dem mit einem doppelten Lüfterrad ausgestatteten Lüfter angeordnet, so dass das vom Brenner erzeugte, heiße Medium vom einen Teil des Lüfterrades direkt aufgenommen und vom anderen Teil verteilt wird. Dies hat den Vorteil, dass das heiße Medium viel schneller und gleichmäßiger verteilt werden kann als bei den Vorrichtungen nach dem Stand der Technik. Der Bereich des Brenners ist durch den schnellen Abtransport der heißen Gase auch vor Überhitzung geschützt. Darüber hinaus ist kein Rohr mehr notwendig, durch welches das heiße Medium vom Brenner in den Ofenraum hinein transportiert wird. Die sich durch das Rohr ergebenden Nachteile, wie Wärmestrahlung und Verzunderung des Rohres sind dadurch auch ausgeschaltet. Die Anlage ist deutlich verschleißärmer und die Temperaturverteilung im Ofenraum ist gleichmäßiger und besser steuerbar, wodurch sich eine gleichbleibende und verbesserte Qualität der im Ofenraum befindlichen Waren ergibt.

Darüber hinaus ist es auch möglich, bestehende Ofenanlagen auf das erfindungsgemäße System umzurüsten.

Durch die erfindungsgemäße Anordnung wird die Ofenanlage deutlich kompakter und platzsparender ausgeführt, da die bisher außerhalb des Ofenraumes befindlichen Brenner nicht mehr benötigt werden. Des Weiteren ist auch eine individuelle Herstellung des einzelnen Ofens durch die Geometrie und Anordnung der Rohre nicht mehr notwendig, da die erfindungsgemäßen Ofenanlagen mehr oder weniger als standardisierte Bauteile herstellbar sind, werden die Herstellungskosten deutlich reduziert. Um die Ofenanlage zwischen Updraft- und Downdraft-Betrieb zu wechseln, muss lediglich die Geometrie des doppelten Lüfterrades verändert werden. Die mit der erfindungsgemäßen Vorrichtung ausgestatteten Ofenanlagen werden so deutlich kostengünstiger und einfacher herstellbar.

Es ist besonders empfehlenswert, den Brenner aus einer sehr porösen Keramik herzustellen. Einige Vorteile dieser Anordnung sind die gute Temperaturbeständigkeit des Brennerwerkstoffs sowie eine gleichmäßige und gute Verteilung des Gas/Luftgemisches im Flächenbrenner.

Günstigerweise ist auf einer Seite des Brenners zumindest eine Zündelektrode vorgesehen. Diese Elektrode zündet das Gas/Luftgemisch, so dass die Verbrennung stattfinden kann.

In einem besonders bevorzugten Ausführungsbeispiel zündet die Zündelektrode das Gas/Luftgemisch nur einmal zu Beginn des Brennerbetriebs und danach läuft die Verbrennung des Gas/Luftgemisches kontinuierlich ohne Einwirkung der Zündelektrode weiter. Diese Methode ist besonders effizient. Auch bewirkt sie eine lange Lebensdauer der Zündelektrode.

Je nach Bedarf kann die Ofenanlage als Durchlaufofen oder als Kammerofen ausgeführt sein. Dies entscheidet sich nach den jeweiligen Gegebenheiten und dem Anwendungsfall.

Besonders vorteilhaft ist es, die vorliegende Erfindung bei Ofenanlagen im Temperaturbereich bis 900°C anzuwenden. Gerade in diesem Temperaturbereich wird bevorzugt Konvektionswärme verwendet.

In einer weiteren bevorzugten Ausführungsform besteht der Lüfter aus Edelstahl. Dieses Material ist besonders gut zur Verwendung in den entsprechenden Ofenanlagen geeignet, da es relativ temperaturbeständig ist und nicht zu Verschmutzungen der Anlagen führt.

Weitere Vorteile und Ausführungsbeispiele der Erfindung ergeben sich aus den Ansprüchen der nachfolgenden Beschreibung und den Zeichnungen. Es zeigen:
- Fig. 1: Einen erfindungsgemäßen Brenner mit doppeltem Lüfterrad im Updraft-Betrieb,
- Fig. 2: eine ähnliche Anordnung wie in Fig. 1 jedoch im Downdraft- Betrieb,
- Fig. 3: eine Ofenanlage im Updraft-Betrieb,
- Fig. 4: einen Brenner in Draufsicht gemäß des Schnittes IV-IV in Fig. 1,
- Fig. 5: eine weitere Ausführungsform des Brenners in Draufsicht gemäß des Schnittes V-V in Fig. 1

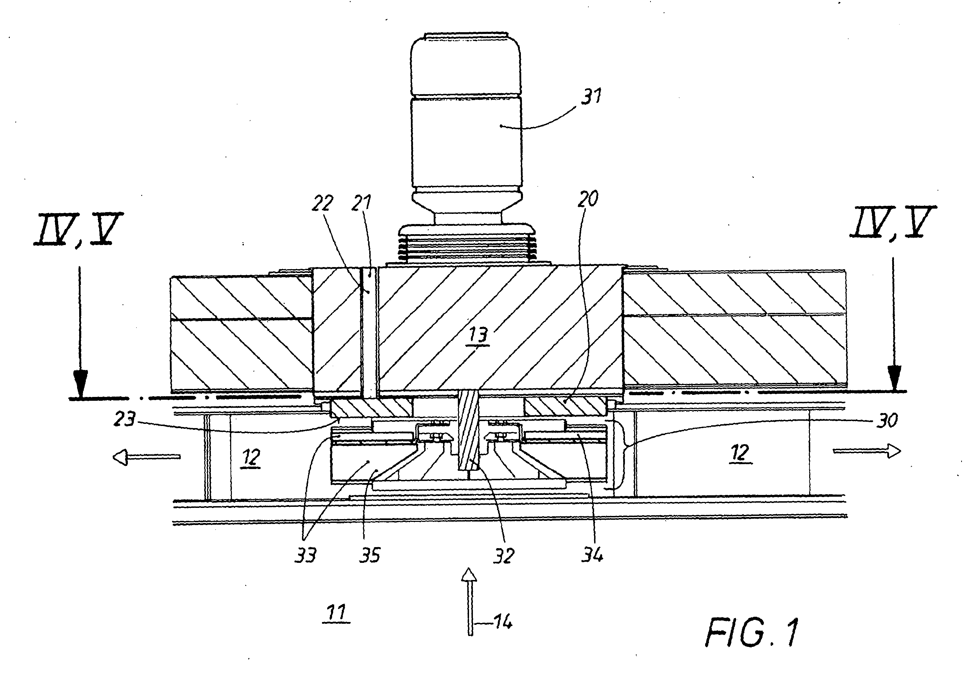

In Fig. 1 ist eine erfindungsgemäße Vorrichtung zum Beheizen von Ofenanlagen 10 für Waren dargestellt. Die Vorrichtung verfügt über einen Flächenporenbrenner 20 der oberhalb eines Lüfterrads 30 angeordnet ist. Das Lüfterrad 30 wird über einen Motor 31 und eine Welle 32 angetrieben. Zwischen dem Motor 31 und dem Flächenporenbrenner 20 befindet sich die Isolierung 13, die den Motor 31 vor der Hitzeeinwirkung des Flächenporenbrenners 20 schützt. Der Lüfter 30 besitzt ein Lüfterrad 33, welches in zwei Teile 34, 35 aufgeteilt ist. Der eine Teil 34 des Lüfterrads 33 saugt das heiße Medium an, welches durch Verbrennung des Gas/Luftgemisches 21 an der einen Seite 23 des Flächenporenbrenners 20 entsteht, während der andere Teil 35 des Lüfterrads 33 die Luft 14 aus dem Ofenraum 11 ansaugt. Sowohl das heiße Medium als auch die Luft 14 aus dem Ofenraum 11 werden dann in die Umwälzkanäle 12 geleitet. Von dort findet eine Einleitung beider gasförmiger Medien in den Ofenraum 11 statt.

Des Weiteren ist die Vorrichtung mit einer Zuführung 22 des Gas/Luftgemisches 21 ausgestattet, welche durch die Isolierung 13 zum Flächenporenbrenner 20 führt. Hierdurch wird das Gas/Luftgemisch 21 dem Flächenporenbrenner 20 direkt zugeführt um dort verbrannt zu werden.

Die in Fig. 1 dargestellte Vorrichtung ist im Updraft-Betrieb tätig, d.h. dass die Luft 14 aus dem Ofenraum 11 vom Lüfter 30 angesaugt und dem Ofenraum 11 über die Umwälzkanäle 12 von unten wieder zugeführt wird.

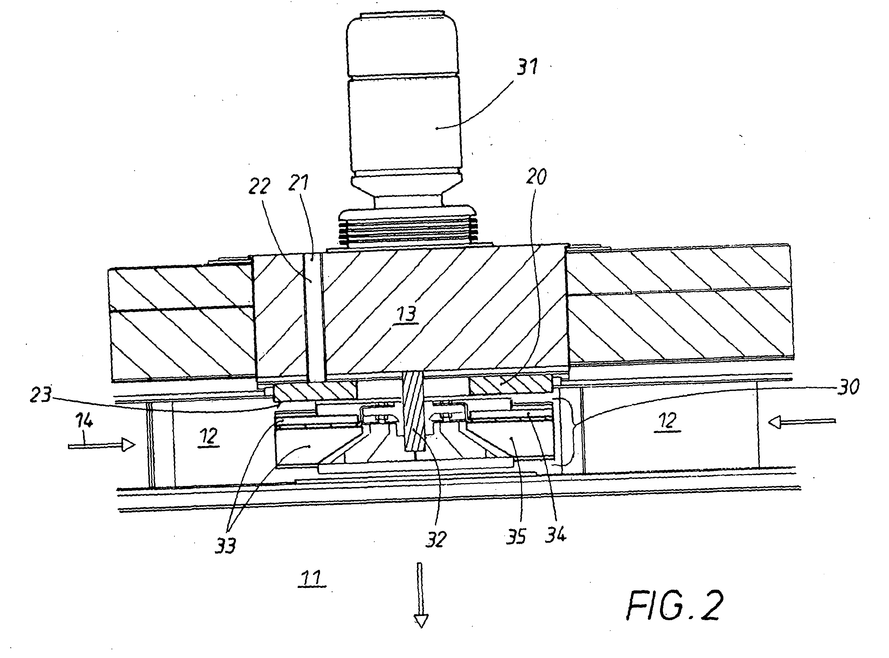

Eine ähnliche Ausführungsform der Erfindung ist in Fig. 2 zu sehen. Allerdings arbeitet die hier gezeigt Vorrichtung im Downdraft-Betrieb. Dies wird erreicht, indem das doppelte Lüfterrad 33 des Lüfters 30 eine andere Geometrie aufweist als beim Updraft-Betrieb. Ansonsten wir der Lüfter 30 wiederum über den bekannten Motor 31 und die Welle 32 angetrieben. Das heiße Medium wird wieder von dem einen Teil 34 des Lüfterrads 33 an der einen Seite 23 des Flächenbrenners 20 abgesaugt. Jedoch wird die Luft 14 aus den Umwälzkanälen 12 vom anderen Teil 35 des Lüfterrads 33 angesaugt und zusammen mit dem heißen Medium des Brenners 20 von oben in den Ofenraum 11 eingeleitet. Die Luft 14 wird dem Ofenraum 11 im unteren Bereich des Ofenraums 11 entnommen und über die Umwälzkanäle 12 wieder dem Lüfter 30 zugeführt. Das Gas/Luftgemisch 21 wir wieder über eine Zuführung 22, die in der Isolierung 13 angeordnet ist, dem Brenner 20 zugeführt. Je nach Geometrie und Konstruktion des Brenners 20 können dabei eine oder mehrere Zuführungen 22 für das Gas/Luftgemisch 21 vorgesehen sein.

Ob die erfindungsgemäße Vorrichtung im Updraft- oder im Downdraft-Bertieb arbeitet hängt von dem jeweiligen Anwendungsfall ab. Insbesondere bei der Herstellung von Glas für Flachbildschirme ist der Downdraft-Betrieb vorteilhaft.

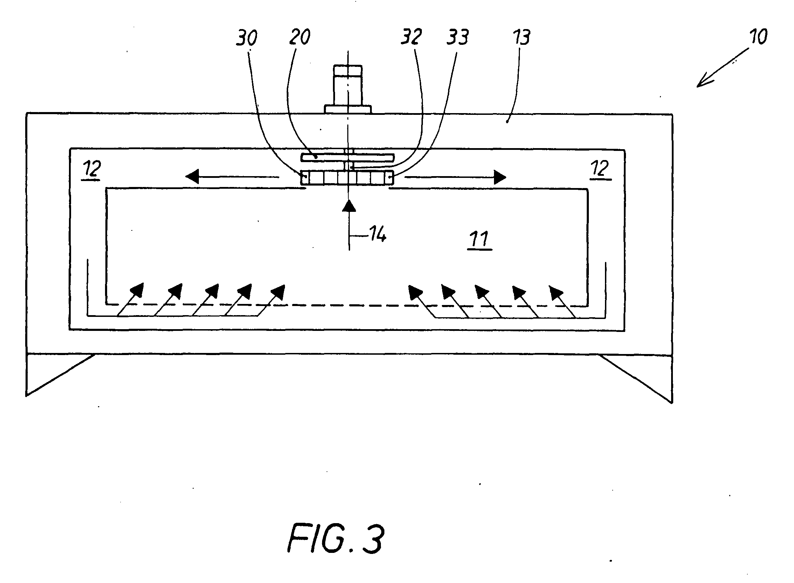

Fig. 3 zeigt eine Ofenanlage 10 im Updraft-Betrieb. Auch hier ist wieder der Lüfter 30 zu erkennen, der die Luft 14 aus dem Ofenraum 11 ansaugt und in die Umwälzkanäle 12 einleitet. Die Luft wird hierbei im Bodenbereich des Ofenraums 11 durch Auslassöffnungen an den Umwälzkanälen 12 wieder in den Ofenraum geleitet. Hierdurch ergibt sich eine gleichmäßige Luft- und Wärmeverteilung im gesamten Ofenraum 11.

Der Lüfter 30 wird auch hier wieder über eine Welle 32 angetrieben und verfügt über ein doppeltes Lüfterrad 33. Die gesamte Ofenanlage 10 ist mit einer Isolierung 13 ausgestattet, die Wärmeverluste über die Ofenwand verringert. Oberhalb des Lüfters 30 ist wiederum der Flächenbrenner 20 angebracht.

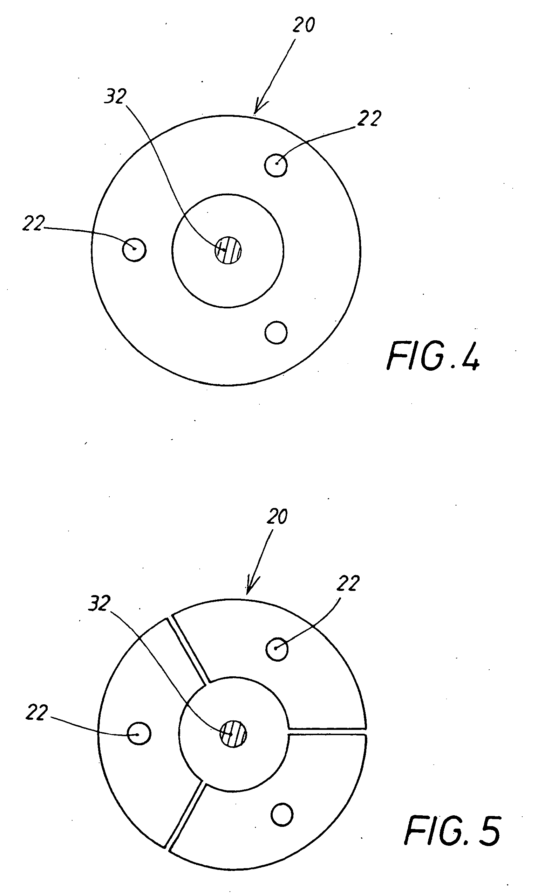

Fig. 4 zeigt nun die mögliche Geometrie eines Flächenbrenners 20 gemäß dem Schnitt IV-IV in Fig. 1. Man erkennt die Welle 32 in der Mitte des ringscheibenartigen Brenners 20. Diese Welle 32 dient dem Antrieb des Lüfters 30. Im vorliegenden Beispiel sind drei Zuführungen 22 für das Gas/Luftgemisch 21 vorgesehen. Je nach Art des Brennermaterials und der sonstigen Gegebenheiten können jedoch auch mehr oder weniger Zuführungen 22 für das Gas- Luftgemisch 21 vorgesehen sein.

In Fig. 5 ist der Brenner 20 ringsegmentartig über dem Lüfter 30 angeordnet. Auch hier ist in der Mitte der Ringsegmente wieder die Welle 32 erkennbar. Bei den drei Ringsegmenten verfügt jedes über eine Zuführung 22 für das Gas/Luftgemisch 21. Es ist selbstverständlich auch möglich, mehr oder weniger Ringsegmente vorzusehen.

Es sei darauf hingewiesen, dass die dargestellten Ausführungsformen lediglich Beispiele der Erfindung sind. Diese ist nicht darauf beschränkt, es sind vielmehr noch verschiedene Ausführungsformen und Abwandlungen möglich.

## Patentansprüche

1. Ofenanlage (10) für Waren, insbesondere für Gläswaren,
wobei die Ofenanlage (10) über wenigstens einen Ofenraum (11) verfügt, in welchem die Waren befindlich sind,
mit einem als Flächenporenbrenner ausgebildeten Brenner. (20), der sich innerhalb des Ofenraumes (11) befindet, in dem ein Gas/Luftgemisch (21) verbrannt wird und der **dadurch** ein heißes gasförmiges Medium erzeugt,
wobei das heiße Medium in den Ofenraum (11) führbar ist, welcher **dadurch** beheizbar ist,
und mit einem Lüfter (30), der für die Verteilung des heißen Mediums im Ofenraum (11) sorgt,
**dadurch gekennzeichnet,**
**dass** der Brenner (20) direkt benachbart zum Lüfter (30) angeordnet ist,
**dass** der Lüfter (30) über ein doppeltes Lüfterrad (33) verfügt,
wobei der eine Teil (34) das heiße Medium vom Brenner (20) ansaugt, während der andere Teil (35) die Luft (14) vom Ofenraum (11) ansaugt bzw. in den Ofenraum (11) bläst wodurch das heiße Medium vom Lüfter (30) direkt verteilbar ist.

2. Ofenanlage nach Anspruch 1, **dadurch gekennzeichnet, dass** der Brenner (20) aus einer sehr porösen Keramik besteht.

3. Ofenanlage nach einem oder mehreren der Ansprüche 1 oder 2, **dadurch gekennzeichnet, dass** auf der einen Seite (23) des Brenners (20) zumindest eine Zündelektrode vorgesehen ist.

4. Ofenanlage nach einem oder mehreren der Ansprüche 1 oder 3, **dadurch gekennzeichnet, dass** der Brenner (20) ringscheibenartig über dem Lüfter (30) angeordnet ist.

5. Ofenanlage nach einem oder mehreren der Ansprüche 1 bis 3, **dadurch gekennzeichnet, dass** der Brenner (20) ringsegmentartig über dem Lüfter (30) angeordnet ist.

6. Ofenanlage nach einem oder mehreren der Ansprüche 1 bis 5, **dadurch gekennzeichnet, dass** innerhalb des Ofenraumes (11) ein oder mehrere Umwälzkanäle (12) vorgesehen sind, die eine gezieltere Luftverteilung im Ofenraum (11) bewirken.

7. Ofenanlage nach einem oder mehreren der Ansprüche 1 bis 6, **dadurch gekennzeichnet, dass** der Lüfter (30) über einen Motor (31) und eine Welle (32) betrieben wird,
und dass zwischen dem Motor (31) und dem Brenner (20) eine Isolierung (13) vorgesehen ist.

8. Ofenanlage nach einem oder mehreren der Ansprüche 1 bis 7, **dadurch gekennzeichnet, dass** die Zuführung (22) des Gas/Luftgemisches (21) zum Brenner (20) von oben durch die Isolierung (13) der Ofenanlage (10) erfolgt.

9. Ofenanlage nach einem oder mehreren der Ansprüche 1 bis 8, **dadurch gekennzeichnet, dass** die Ofenanlage (10) ein Durchlaufofen ist.

10. Ofenanlage nach einem oder mehreren der bis 8, **dadurch gekennzeichnet, dass** die Ofenanlage (10) ein Kammerofen ist.

11. Ofenanlage nach einem oder mehreren der Ansprüche 1 bis 10, **dadurch gekennzeichnet, dass** die Ofenanlage (10) bei Temperaturen bis 900°C betreibbar ist.

12. Ofenanlage nach einem oder mehreren der Ansprüche 1 bis 11, **dadurch gekennzeichnet, dass** der Lüfter (30) aus Edelstahl besteht.

13. Verwendung einer Ofenanlage nach einem oder mehreren der Ansprüche 3 bis 13, **dadurch gekennzeichnet, dass** die Zündelektrode bzw. Zündelektroden das Gas/Luftgemisch (21) nur einmal zu Beginn des Betriebs des Brenners (20) zünden,
und dann keine weiteren Zündungen mehr durchführen wobei der Brenner (20) nach dieser ersten Zündung kontinuierlich arbeitet.

14. Verwendung einer Ofenanlage nach einem oder mehreren der Ansprüche 1 bis 13, **dadurch gekennzeichnet**, das der Lüfter (30) im Updraft-Betrieb betätigt wird.

15. Verwendung einer Ofenanlage nach einem oder mehreren der Ansprüche 1 bis 13, **dadurch gekennzeichnet, dass** der Lüfter (30) im Downdraft-Betrieb betätigt wird.

## Claims

1. Furnace (10) for goods, in particular for glassware,
whereby the furnace (10) has at least one furnace chamber (11) in which the goods are found,
with a burner (20) designed as a surface porous burner, which is found inside the furnace chamber (11) in which a gas/air mixture (21) is burned, and which thereby creates a hot, gaseous medium,
whereby the gaseous medium can be conducted into the furnace chamber (11) which can thereby be heated,
and with a fan (30) which tends to the distribution of the hot medium in the furnace chamber (11),
thereby **characterized**
**in that** the burner (20) is arranged directly adjacent to the fan (30),
**in that** the fan (30) has a doubled fanwheel (33),
whereby one part (34) suctions the hot medium from the burner (20) while the other part (35) suctions the air (14) from the furnace chamber (11), i.e., blows it into the furnace chamber (11), by means of which the hot medium is directly distributable by the fan (30).

2. Furnace pursuant to Claim 1, thereby **characterized in that** the burner (20) is made of a very porous ceramic material.

3. Furnace pursuant to one or several of the claims 1 or 2, thereby **characterized in that** provided on one side (23) of the burner (20) is at least one ignition electrode.

4. Furnace pursuant to one or several of the claims 1 or 3, thereby **characterized in that** the burner (20) is arranged ring target-like above the fan (30).

5. Furnace pursuant to one or several of the claims 1 to 3, thereby **characterized in that** the burner (20) is arranged ring segment-like above the fan (30).

6. Furnace pursuant to one or several of the claims 1 to 5, thereby **characterized in that** provided inside the furnace chamber (11) are one or several circulating channels (12) which achieve a more efficient distribution of air in the furnace chamber (11).

7. Furnace pursuant to one or several of the claims 1 to 6, thereby **characterized in that** the fan (30) is driven by means of a motor (31) and a shaft (32),
and **in that** provided between the motor (31) and the burner (20) is an insulation (13).

8. Furnace pursuant to one or several of the claims 1 to 7, thereby **characterized in that** the feed (22) of the gas/air mixture (21) to the burner (20) ensues from above through the insulation (13) of the furnace (10).

9. Furnace pursuant to one or several of the claims 1 to 8, thereby **characterized in that** the furnace (10) is a through-type furnace.

10. Furnace pursuant to one or several of the claims 1 to 8, thereby **characterized in that** the furnace (10) is a chamber furnace.

11. Furnace pursuant to one or several of the claims 1 to 10, thereby **characterized in that** the furnace (10) is operable at temperatures up to 900°C.

12. Furnace pursuant to one or several of the claims 1 to 11, thereby **characterized in that** the fan (30) is made of stainless steel.

13. Utilization of a furnace pursuant to one or several of the claims 3 to 13, thereby **characterized in that** the ignition electrode, i.e., ignition electrodes ignite the gas/air mixture (21) only once at the start of operating the burner (20)
and subsequently carry out no further ignitions, whereby the burner (20) works continuously following this initial ignition.

14. Utilization of a furnace pursuant to one or several of the claims 1 to 13, thereby **characterized in that** the fan (30) is operated in updraft mode.

15. Utilization of a furnace pursuant to one or several of the claims 1 to 13, thereby **characterized in that** the fan (30) is operated in downdraft mode.

## Revendications

1. Installation de four (10) pour produits, notamment pour produits en verre,
sachant que l'installation de four (10) dispose d'au moins un compartiment (11) de four dans lequel se trouvent les produits,
avec un brûleur (20) configuré en brûleur à pores superficiels qui se trouve à l'intérieur du foyer (11) du four, dans lequel brûle un mélange gaz/air (21) et génère ainsi un fluide gazeux très chaud,
ce fluide très chaud étant guidable dans le foyer (11), lequel compartiment devient chauffable de la sorte.
et avec un ventilateur (30) veillant à la répartition du fluide très chaud dans le foyer (11).
**caractérisée en ce que**
le brûleur (20) est agencé directement au voisinage du ventilateur (30),
le ventilateur (30) dispose d'une double roue (33),
sachant qu'une partie (34) aspire le fluide très chaud du brûleur (20), tandis que l'autre partie (35) aspire l'air (14) du foyer (11), ou l'injecte dans le foyer (11), ce qui permet au ventilateur (30) de répartir directement le fluide très chaud.

2. Installation de four selon la revendication 1, **caractérisé en ce que** le brûleur (20) se compose d'une céramique très poreuse.

3. Installation de four selon une ou plusieurs des revendications 1 ou 2, **caractérisée en ce que** sur un côté (23) du brûleur (20) est prévue au moins une électrode d'allumage.

4. Installation de four selon une ou plusieurs des revendications 1 ou 3, **caractérisée en ce que** le brûleur (20) est agencé en forme d'anneau circulaire au dessus du ventilateur (30).

5. Installation de four selon une ou plusieurs des revendications 1 à 3, **caractérisée en ce que** le brûleur (20) est agencé en forme de segments annulaires au dessus du ventilateur (30).

6. Installation de four selon une ou plusieurs des revendications 1 à 5, **caractérisée en ce qu'**à l'intérieur du foyer (11) sont prévus un ou plusieurs canaux de circulation (12) ayant pour effet de répartir l'air de manière plus ciblée dans le foyer (11).

7. Installation de four selon une ou plusieurs des revendications 1 à 6, **caractérisée en ce que** le ventilateur (30) est entraîné via un moteur (31) et un arbre (32),
et **en ce qu'**entre le moteur (31) et le brûleur (20) est prévue une isolation (13).

8. Installation de four selon une ou plusieurs des revendications 1 à 7, **caractérisée en ce que** l'amenée (22) du mélange gaz/air (21) au brûleur (20) a lieu par le haut en traversant l'isolation (13) équipant l'installation de four (10).

9. Installation de four selon une ou plusieurs des revendications 1 à 8, **caractérisée en ce que** l'installation de four (10) est un four continu.

10. Installation de four selon une ou plusieurs des revendications 1 à 8, **caractérisée en ce que** l'installation de four (10) est un four à chambre.

11. Installation de four selon une ou plusieurs des revendications 1 à 10, **caractérisée en ce que** l'installation de four (10) est exploitable à des températures pouvant atteindre 900°C.

12. Installation de four selon une ou plusieurs des revendications 1 à 11, **caractérisée en ce que** le ventilateur (30) est en acier inoxydable.

13. Utilisation d'une installation de four selon l'une ou plusieurs des revendications 3 à 13, **caractérisée en ce que** l'électrode d'allumage ou les électrodes d'allumage n'allument le mélange gaz/air (21) qu'une seule fois, au commencement du fonctionnement du brûleur (20),
et **en ce qu'**ils n'effectuent aucun autre allumage, sachant que le brûleur (20) fonctionne en permanence après ce premier allumage.

14. Utilisation d'une installation de four selon l'une ou plusieurs des revendications 1 à 13, **caractérisée en ce que** le ventilateur (30) est exploité en mode Updraft (flux montant).

15. Utilisation d'une installation de four selon une ou plusieurs des revendications 1 à 13, **caractérisée en ce que** le ventilateur (30) est exploité en mode Downdraft (flux descendant).
